# EUROPEAN PATENT SPECIFICATION

(11) **EP 3 972 303 B1**
(45) Date of publication and mention of the grant of the patent: **04.03.2026**
(21) Application number: 20808902.9
(22) Date of filing: 28.04.2020
(51) Int. Cl.: H04W 8/22, H04L 5/00, H04W 76/15

(54) **USER EQUIPMENT AND BASE STATION DEVICE**
BENUTZERGERÄT UND BASISSTATIONSVORRICHTUNG
ÉQUIPEMENT UTILISATEUR ET DISPOSITIF DE STATION DE BASE

(30) Priority: 17.05.2019 JP 2019093775
(43) Date of publication of application: 23.03.2022
(73) Proprietor: NTT DOCOMO, INC., Chiyoda-Ku Tokyo 100-6150 (JP)
(72) Inventor: TAKAHASHI, Hideaki, Tokyo 100-6150 (JP); HARADA, Hiroki, Tokyo 100-6150 (JP)
(74) Representative: Hoffmann Eitle
(86) International application number: PCT/JP2020/018098
(87) International publication number: WO 2020/235318

(56) References cited:
- JP-A- 2019 062 507
- US-A1- 2016 270 139
- US-A1- 2017 238 163
- US-A1- 2017 339 555
- US-A1- 2018 019 898
- "3rd Generation Partnership Project;Technical Specification Group Radio Access Network;NR;Radio Resource Control (RRC) protocol specification(Release 15", 3GPP TS 38.331, no. V15.5.1, April 2019 (2019-04-01), XP051723500
- NTT DOCOMO, INC.: "Introduction of NR-DC specific UE capabilities inside the band combination", 3GPP TSG RAN WG2 #106 R2-1908368, 18 May 2019 (2019-05-18), XP051726086

## Description

### TECHNICAL FIELD

The present invention relates to a user equipment and a base station apparatus in a wireless communication system.

### BACKGROUND ART

In NR (New Radio) (also referred to as "5G"), which is the successor system of LTE (Long Term Evolution), techniques for satisfying, as required conditions, a large capacity system, high data transmission speed, low delay, and simultaneous connection of many terminals, low cost, power saving, and the like are being studied (for example, see Non-Patent Document 1).

Like dual connectivity in an LTE system, an NR system has adopted a technique referred to as an LTE-NR dual connectivity, an NR-NR dual connectivity, or a multi RAT (Multi Radio Access Technology) dual connectivity (hereinafter referred to as "MR-DC"), in which data is divided between a base station (eNB) of the LTE system and a base station (gNB) of the NR system, and the divided pieces of data are transmitted and received by these base stations simultaneously (for example, Non-Patent Document 2).

US 2017/339555 A1 relates to systems, methods, apparatuses, and computer program products for user equipment (UE) capability signaling for dual connectivity (DC). One method may include transmitting to at least one UE, by a network node, a message comprising a flag indicating that the apparatus supports dual connectivity and/or wants to receive UE capability indications of DC support.

US 2016/270139 A1 relates to methods for signaling and receiving mobility terminal capabilities with respect to synchronized or unsynchronized dual connectivity operations. An example method suitable for implementation in a mobile terminal configured for dual connectivity information includes receiving a request from a network node for signaling capability information to the network node. The method further includes signaling to the network node, in response to the request, capability information that includes an indication of which carrier aggregation band combinations are supported by the mobile terminal for dual connectivity operation and an indication of a level of synchronization with which the mobile terminal can support dual connectivity operation for one or more of the supported carrier aggregation combinations.

### Related Art Document

### [Non-Patent Documents]

Non-Patent Document 1: 3GPP TS 38.300 V15.5.0 (2019-03)
Non-Patent Document 2: 3GPP TS 37.340 V15.5.0 (2019-03)

### SUMMARY OF THE INVENTION

### [PROBLEM TO BE SOLVED BY THE INVENTION]

In a case where the capability of the user equipment is different between an NR band combination supporting NR-DC (NR-NR Dual Connectivity) and an NR band combination supporting CA (Carrier Aggregation), it is necessary to individually signal a parameter applied to the NR band combination supporting the NR-DC and a parameter applied to the NR band combination supporting the CA (Carrier Aggregation). However, if both of the parameter applied to the NR-DC and the parameter applied to the CA are signaled with respect to all the NR band combinations, the size of the signaling increases excessively.

The present invention has been made in view of the above circumstances, and it is an object of the present invention to improve the efficiency for reporting of the capability of a user equipment for dual connectivity in a wireless communication system.

### [MEANS FOR SOLVING THE PROBLEM]

The present invention is defined in the appended independent claims. Further preferred embodiments are defined in the dependent claim.

According to the technique of the present disclosure, provided is a user equipment including a receiving unit configured to receive, from a base station apparatus, information for requesting a report of a UE (User Equipment) capability, a control unit configured to generate the report that includes a UE capability supported in a band combination, and a transmitting unit configured to transmit the report to the base station apparatus, wherein in a case where a first information element is configured in the report, the control unit generates the report in which a parameter applied to a communication performed with dual connectivity in the band combination is configured in the first information element, and in a case where the first information element is not configured in the report, the control unit generates the report that includes a second information element including a parameter for a carrier aggregation applied to the communication.

### [ADVANTAGE OF THE INVENTION]

According to the technique of the present disclosure, the efficiency for reporting of the capability of a user equipment for dual connectivity in a wireless communication system can be improved.

### BRIEF DESCRIPTION OF DRAWINGS

FIG. 1 is a figure illustrating a configuration example of a network architecture according to an embodiment of the present invention.
FIG. 2 is a figure illustrating a configuration example of a wireless communication system according to the embodiment of the present invention.
FIG. 3 is a sequence diagram for explaining an operation example according to the embodiment of the present invention.
FIG. 4 is a flowchart for explaining an operation example according to the embodiment of the present invention.
FIG. 5 is a figure illustrating an example of a specification change (1) according to the embodiment of the present invention.
FIG. 6 is a figure illustrating an example of a specification change (2) according to the embodiment of the present invention.
FIG. 7 is a drawing illustrating an example of a functional configuration of a base station apparatus 10 according to the embodiment of the present invention.
FIG. 8 is a drawing illustrating an example of a functional configuration of a user equipment 20 according to the embodiment of the present invention.
FIG. 9 is a drawing illustrating an example of a hardware configuration of the base station apparatus 10 or the user equipment 20 according to the embodiment of the present invention.

### [EMBODIMENTS OF THE INVENTION]

An embodiment of the present invention will be hereinafter described with reference to drawings. The embodiment described below is an example, and the embodiment to which the present invention is applied is not limited to the following embodiment.

In an operation of a wireless communication system according to the embodiment of the present invention, existing techniques are used as appropriate. However, an example of existing technique includes an existing LTE, but is not limited to the existing LTE. In addition, the term "LTE" used in this specification has a broad meaning including LTE-Advanced, specifications newer than LTE-Advanced (e.g., NR), unless otherwise specified.

The embodiment of the present invention explained below uses terms such as SS (Synchronization signal), PSS (Primary SS), SSS (Secondary SS), PBCH (Physical broadcast channel), PRACH (Physical random access channel), and the like used for existing LTE. But this is for the sake of convenience in description. Signals, functions, and the like similar to these terms may also be referred to as other names. Terms in NR corresponding to these terms in LTE are NR-SS, NR-PSS, NR-SSS, NR-PBCH, NR-PRACH, and the like. However, even signals used in NR, a prefix "NR-" may not be necessarily attached.

In the embodiment of the present invention, the duplex method may be a TDD (Time Division Duplex) system, an FDD (Frequency Division Duplex) system, or others (for example, Flexible Duplex and the like).

Further, in the embodiment of the present invention, "to configure" a radio parameter or the like may be that a predetermined value is configured in advance (Pre-configure), or that a radio parameter notified from a base station apparatus 10 or a user equipment 20 is configured.

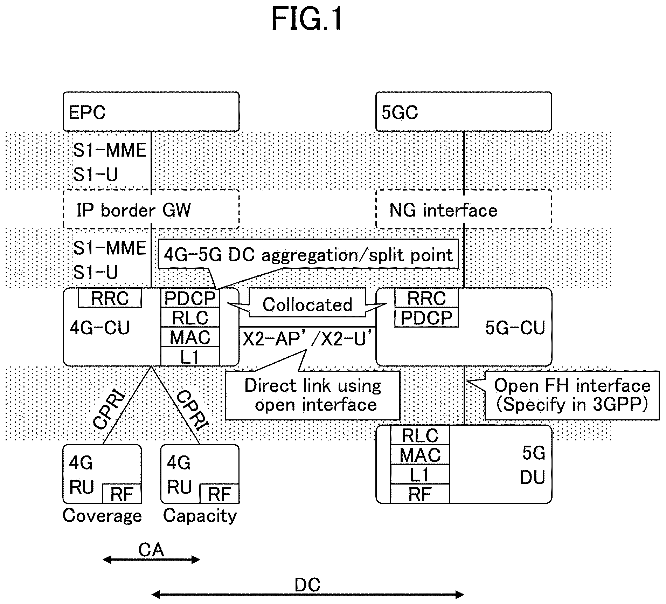

FIG. 1 is a figure illustrating a configuration example of a network architecture according to the embodiment of the present invention. As illustrated in FIG. 1, a radio network architecture according to the embodiment of the present invention includes a 4G-CU, a 4G-RU (Remote Unit, remote radio station), an EPC (Evolved Packet Core), and the like at the LTE-Advanced side. The radio network architecture according to the embodiment of the present invention includes a 5G-CU, a 5G-DU, and the like at the 5G side.

As illustrated in FIG. 1, the 4G-CU includes layers of RRC (Radio Resource Control), PDCP (Packet Data Convergence Protocol), RLC (Radio Link Control), MAC (Medium Access Control), and L1 (layer 1, PHY layer or a physical layer), and is connected to a CPRI (Common Public Radio Interface) to a 4G-RU. A network node including the 4G-CU and the 4G-RU is referred to as an eNB.

At the 5G side, as illustrated in FIG. 1, a 5G-CU includes an RRC layer, and is connected to a 5G-DU via an FH (Fronthaul) interface, and is connected to a 5GC (5G Core Network) via an NG interface (NG interface). Also, the 5G-CU is connected to the 4G-CU via an X2 interface. The PDCP layer of the 4G-CU serves as a joining or separation point in a case of performing 4G-5G DC (Dual Connectivity), i.e., EN-DC (E-UTRA-NR Dual Connectivity). A network node including the 5G-CU and the 5G-DU is referred to as a gNB. The 5G-CU may be referred to as a gNB-CU, and the 5G-DU may be referred to as a gNB-DU.

Also, as illustrated in FIG. 1, CA (Carrier Aggregation) between 4G-RUs is performed, and DC is performed between the 4G-RU and the 5G-DU. Although not illustrated, the UE (User Equipment) is wirelessly connected via the RF of the 4G-RU or the 5G-DU to transmit and receive packets.

It should be noted that FIG. 1 illustrates a radio network architecture during the DC of the LTE-NR, i.e., the EN-DC (E-UTRA-NR Dual Connectivity). However, in a case where the 4G-CU is separated to CU-DU, or NR standalone operation is performed, a similar radio network architecture may also be used. In the case where the 4G-CU is separated to CU-DU, the functions related to the RRC layer and the PDCP layer may be moved to the 4G-CU, and the RLC layer and lower layers may be included in the 4G-DU. It should be noted that, by separating the CU and the DU, the date rate of the CPRI may be reduced.

It should be noted that multiple 5G-DUs may be connected to the 5G-CU. When the UE connects to multiple 5G-CUs, a NR-DC (NR-NR Dual Connectivity) may be performed, and when the UE connects to multiple 5G-DUs and a single 5G-CU, the NR-DC may be performed. Note that the 5G-CU may be directly connected to an EPC without going through the 4G-CU, and 4G-CU may be directly connected to a 5GC without going through the 5G-CU.

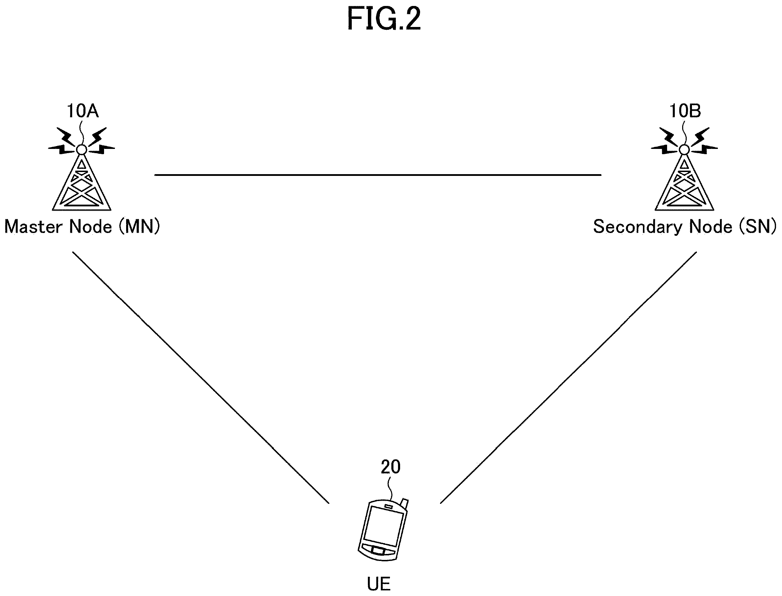

FIG. 2 is a figure illustrating a configuration example of a wireless communication system according to the embodiment of the present invention. FIG. 2 is a schematic view illustrating a wireless communication system during MR-DC (Multi-RAT Dual Connectivity).

As illustrated in FIG. 2, the user equipment 20 communicates with a base station apparatus 10A provided by the NR system and a base station apparatus 10B provided by the NR system (hereinafter, both of the base station apparatus 10A and the base station apparatus 10B may be collectively referred to as a "base station apparatus 10" when the base station apparatus 10A and the base station apparatus 10B are not to be distinguished from each other). The user equipment 20 supports NR-NR dual connectivity, i.e., NR-DC, in which the base station apparatus 10A is a master node (hereinafter "MN") and the base station apparatus 10B is a secondary node (hereinafter "SN"). The user equipment 20 can execute simultaneous transmission or simultaneous reception to/from the base station apparatus 10A serving as the master node and the base station apparatus 10B serving as the secondary node by simultaneously using multiple component carriers provided by the base station apparatus 10A serving as the master node and the base station apparatus 10B serving as the secondary node.

As illustrated in FIG. 2, the user equipment 20 may communicate with the base station apparatus 10A provided by the LTE system and the base station apparatus 10B provided by the NR system. Further, the user equipment 20 may support LTE-NR dual connectivity, i.e., EN-DC, in which the base station apparatus 10A is a MN and the base station apparatus 10B is an SN. The user equipment 20 may execute simultaneous transmission or simultaneous reception to/from the base station apparatus 10A serving as the master node and the base station apparatus 10B serving as the secondary node by simultaneously using multiple component carriers provided by the base station apparatus 10A serving as the master node and the base station apparatus 10B serving as the secondary node.

Also, as illustrated in FIG. 2, the user equipment 20 may communicate with the base station apparatus 10A provided by the NR system and the base station apparatus 10B provided by the LTE system. Further, the user equipment 20 may support NR-LTE dual connectivity, i.e., NE-DC (NR-E-UTRA Dual Connectivity), in which the base station apparatus 10A is an MN and the base station apparatus 10B is an SN. The user equipment 20 may execute simultaneous transmission or simultaneous reception to/from the base station apparatus 10A serving as the master node and the base station apparatus 10B serving as the secondary node by simultaneously using multiple component carriers provided by the base station apparatus 10A serving as the master node and the base station apparatus 10B serving as the secondary node.

Also, as illustrated in FIG. 2, the user equipment 20 may communicate with the base station apparatus 10A provided by the NR system and the base station apparatus 10B provided by the NR system. Further, the user equipment 20 may support NR-NR dual connectivity, i.e., NR-DC, in which the base station apparatus 10A is an MN and the base station apparatus 10B is an SN. The user equipment 20 may execute simultaneous transmission or simultaneous reception to/from the base station apparatus 10A serving as the master node and the base station apparatus 10B serving as the secondary node by simultaneously using multiple component carriers provided by the base station apparatus 10A serving as the master node and the base station apparatus 10B serving as the secondary node.

In the following embodiment, the NR-NR dual connectivity i.e., NR-DC, will be mainly explained, but the user equipment 20 according to the embodiment of the present invention is not limited to the above dual connectivity, and may also be applied to dual connectivity, i.e., MR-DC, between wireless communication systems using different RATs.

Herein, the parameters and elements related to the capability of the user equipment 20 are not defined commonly for all the CCs (Component Carriers), and are separately defined for each band combination, for each band of a band combination, or for each CC of a band combination. Therefore, even with the same band combination, the parameters and elements of the capability of the user equipment 20 for the CA and the parameters and elements of the capability of the user equipment 20 for the DC are separately configured.

For example, in a case where the user equipment 20 supports CA and DC for a band combination "band 1 + band 2", it is necessary to signal the capability of the user equipment 20 with respect to the band combination "band 1 + band 2" for the CA and the capability of the user equipment 20 with respect to the band combination "band 1 + band 2" for the DC. As a result, the size of the signaling increases.

Therefore, in an existing CA band combination (BandCombinationList), a new parameter indicating whether NR-DC is supported or not is provided to allow signaling of ca-ParametersNR for the NR-DC and featureSetCombination for the NR-DC. Further, in a case where ca-ParametersNR for the NR-DC and featureSetCombination for the NR-DC are not signaled, ca-ParametersNR for the CA and featureSetCombination for the CA are allowed to be used for the NR-DC. Both of the ca-ParametersNR and the featureSetCombination are UE capabilities defined for each band combination.

The ca-ParametersNR includes, for example, a parameter indicating whether multiple TAs (Timing Advances) are supported, a parameter indicating whether simultaneous transmission of a PRACH, an SRS (Sounding Reference Signal), a PUCCH (Physical Uplink Control Channel), and a PUSCH (Physical Uplink Shared Channel) is supported, and a parameter indicating whether simultaneous transmission and reception in an inter-band CA or SUL is supported or not, and the like. In other words, the ca-ParametersNR includes configuration parameters for the CA defined for each of the band combinations.

The featureSetCombination is a two-dimensional matrix of featureSet entries. The featureSet includes downlink and uplink configuration parameters. For example, the featureSet includes information indicating a scheduling factor, information indicating whether a cross carrier scheduling is supported, a subcarrier interval, a band width, or the like. In other words, the featureSetCombination includes downlink and uplink configuration parameters defined for each of the band combinations.

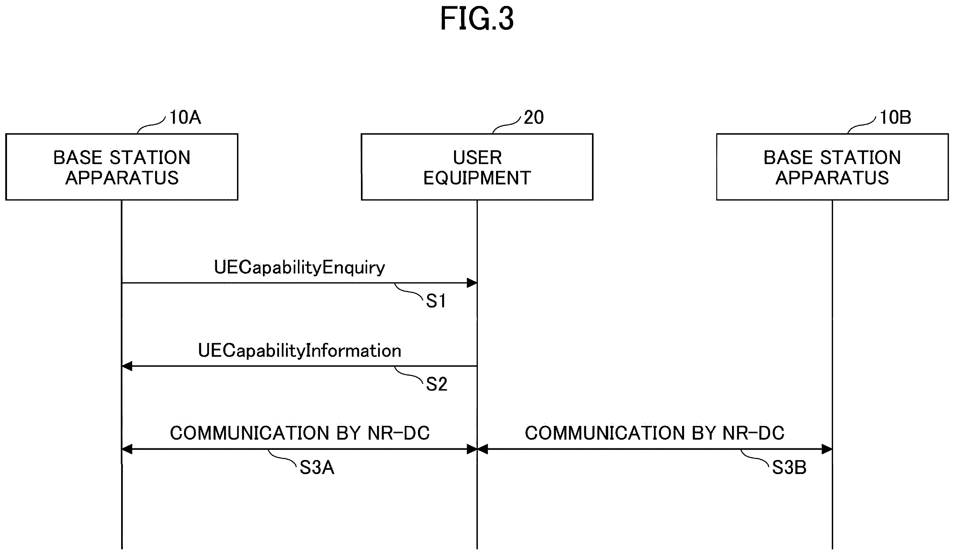

FIG. 3 is a sequence diagram for explaining an example of operation according to the embodiment of the present invention. In step S1, the base station apparatus 10A serving as the master node transmits "UECapabilityEnquiry", i.e., an RRC message, to the user equipment 20. The "UECapabilityEnquiry" is used by the base station apparatus 10A to obtain the UE capability of the user equipment 20. Subsequently, the user equipment 20 transmits "UECapabilityInformation" to the base station apparatus 10A (S2). The "UECapabilityInformation" is used to transmit the UE capability of the user equipment 20 to the base station apparatus 10A. The "UECapabilityInformation" includes the above CA band combination as the UE capability, and includes, for example, "BandCombinationList", "BandCombinationList-v15xy", and the like.

In step S3A, the base station apparatus 10A communicates with the user equipment 20 by using the band combination for the NR-DC supported by the user equipment 20, which is notified by the "UECapabilityInformation". Similarly, the base station apparatus 10B communicates with the user equipment 20 by using a band combination for the NR-DC supported by the user equipment 20, which is notified by the "UECapabilityInformation".

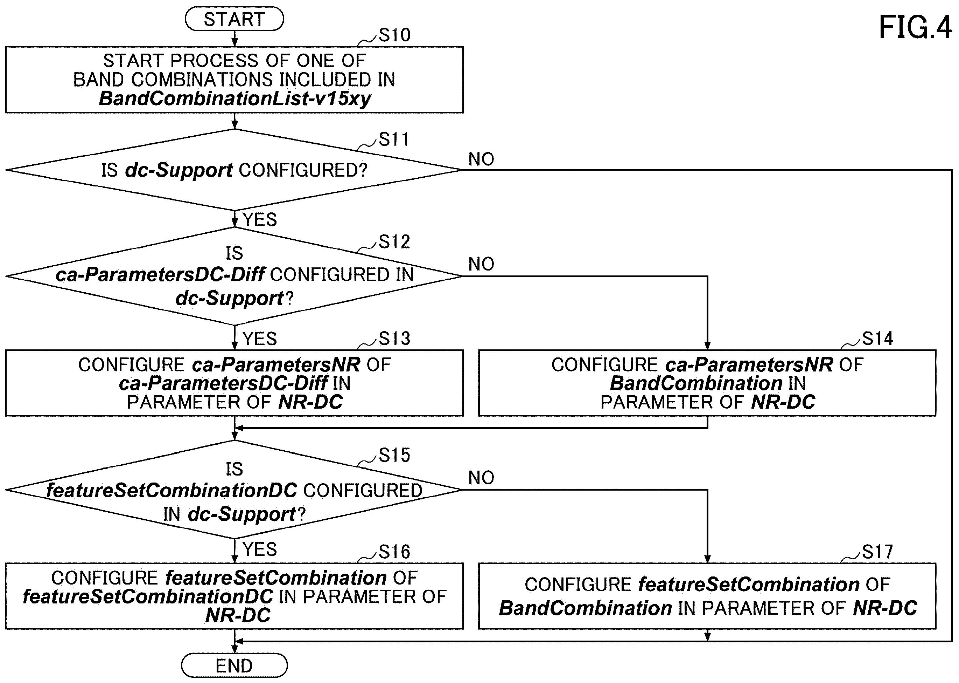

FIG. 4 is a flowchart for explaining an example of operation according to the embodiment of the present invention. The flowchart may be applied to a case where the user equipment 20 configures the "BandCombinationList" included in the "UECapabilityInformation", or may be applied to an interpretation of information elements which the base station apparatus 10 receives in the "BandCombinationList" included in the "UECapabilityInformation".

In step S10, a process of one of band combinations included in the "BandCombinationList-v15xy", which is one of CA band combinations, is started. Subsequently, in step S11, the base station apparatus 10 determines whether an information element "dc-Support" is configured in the "BandCombinationList-v15xy". In a case where the "dc-Support" is configured (YES in S11), step S12 is subsequently performed. In a case where the "dc-Support" is not configured (NO in S11), the band combination is determined not to support the NR-DC, and this process is ended. When the user equipment 20 configures the "BandCombinationList" included in the "UECapabilityInformation" in step S11, the "dc-Support" is configured in a case where the band combination supports DC, and the "dc-Support" is not configured in a case where the band combination does not support DC.

In step S12, the base station apparatus 10 determines whether an information element "ca-ParametersDC-Diff" is configured in the "dc-Support". In a case where the "ca-ParametersDC-Diff" is configured (YES in S12), step S13 is subsequently performed. In a case where the "ca-ParametersDC-Diff" is not configured (NO in S12), step S14 is subsequently performed. When the user equipment 20 configures the "ca-ParametersDC-Diff" included in the "dc-Support" in step S12, the "ca-ParametersDC-Diff" is configured in a case where there is a difference between the parameters for the NR-DC and the parameters for the CA in the band combination, and the "ca-ParametersDC-Diff" is not configured in a case where there is not any difference between the parameters for the NR-DC and the parameters for the CA in the band combination.

In step S13, the base station apparatus 10 configures, in the parameter for the NR-DC in the band combination, information elements of the "ca-ParametersDC-Diff", i.e., "ca-ParametersNR", "ca-ParametersNR-v1540", and "ca-ParametersNR-v1550". In step S14, the base station apparatus 10 configures, in the parameter for the NR-DC in the band combination, an information element "ca-ParametersNR" of the "BandCombination", an information element "ca-ParametersNR-v1540", and an information element "ca-ParametersNR-v1550". It should be noted that the "BandCombination" is an information element included in the "BandCombinationList", and is transmitted in the "UECapabilityInformation" from the user equipment 20 to the base station apparatus 10.

In step S15, the base station apparatus 10 determines whether an information element "featureSetCombinationDC" is configured in the "dc-Support". In a case where the "featureSetCombinationDC" is configured (YES in S15), step S16 is subsequently performed, and in a case where the "featureSetCombinationDC" is not configured (NO in S15), step S17 is subsequently performed. When the user equipment 20 configures the "featureSetCombinationDC" included in the "dc-Support" in step S15, the "featureSetCombinationDC" is configured in a case where the parameters for the NR-DC are configured separately from the CA in the band combination, and the "featureSetCombinationDC" is not configured in a case where the parameters for the NR-DC are not configured separately from the CA in the band combination.

In step S16, the base station apparatus 10 configures, in the parameter for the NR-DC in the band combination, an information element "featureSetCombination" indicated by the "featureSetCombinationDC", and ends the process in this flowchart. In step S17, the base station apparatus 10 configures, in the parameter for the NR-DC in the band combination, an information element "featureSetCombination" indicated by the "BandCombination", and ends the process in this flowchart.

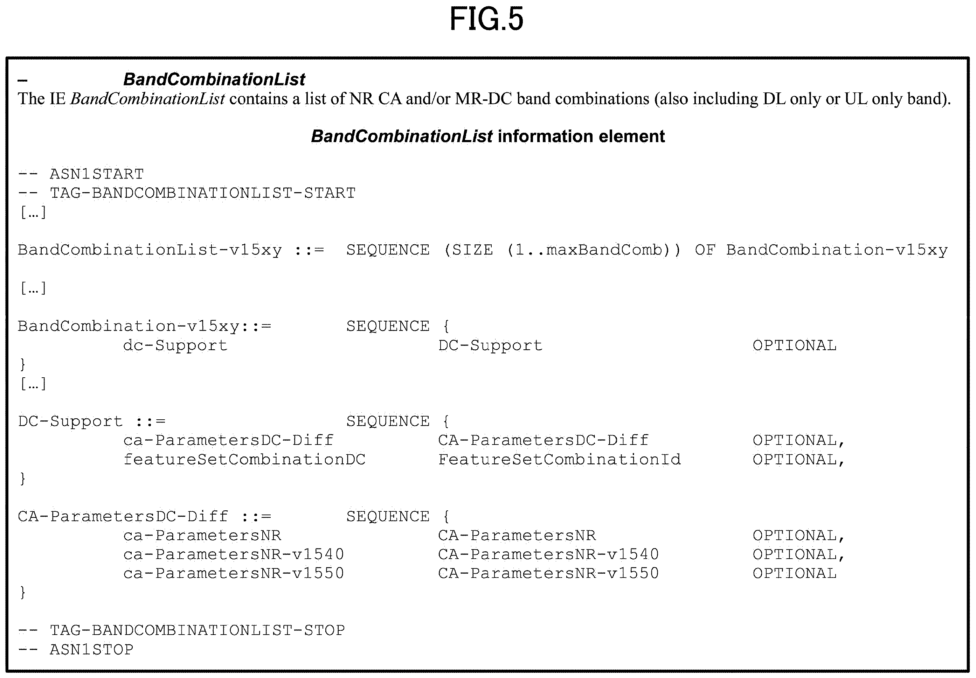

FIG. 5 is a figure illustrating an example of a specification change (1) according to the embodiment of the present invention. As illustrated in FIG. 5, with respect to the information element "BandCombinationList-v15xy", at most maxBandComb number of the information elements "BandCombinationList-v15xy" are included. The "BandCombinationList-v15xy" includes an information element "dc-Support". The "dc-Support" includes an information element "DC-Support". The "DC-Support" includes an information element "ca-ParametersDC-Diff" and an information element "featureSetCombinationDC". The "ca-ParametersDC-Diff" includes information elements "CA-ParametersNR", "CA-ParametersNR-v1540", and "CA-ParametersNR-v1550". The "featureSetCombinationDC" includes an information element "FeatureSetCombinationId". The "CA-ParametersNR", the "CA-ParametersNR-v1540", and the "CA-ParametersNR-v1550" include the UE capability for the CA defined for each of the band combinations. The "FeatureSetCombinationId" is an identifier for identifying FeatureSetCombination.

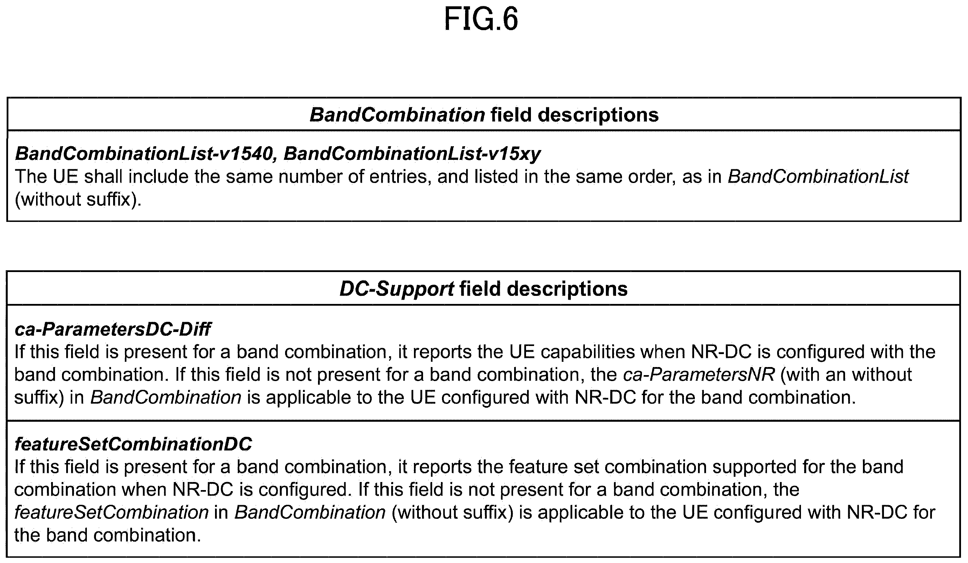

FIG. 6 is a figure illustrating an example of a specification change (2) according to the embodiment of the present invention. As illustrated in FIG. 6, the "BandCombinationList-v15xy" includes, in the same order, the same number of entries as the "BandCombinationList".

Also, as illustrated in FIG. 6, in a case where the "ca-ParametersDC-Diff" is included in the "DC-Support", the "ca-ParametersDC-Diff" indicates the UE capability for a target band combination when the NR-DC is configured in the target band combination. In other words, the "ca-ParametersDC-Diff" includes configuration parameters for the CA defined for each of the band combinations. In a case where the "ca-ParametersDC-Diff" is not included in the "DC-Support", the UE capability based on "BandCombination" is configured in the target band combination when the NR-DC is configured in the target band combination.

Also, as illustrated in FIG. 6, in a case where the "featureSetCombinationDC" is included in the "DC-Support", the "featureSetCombinationDC" indicates a featureSet when the NR-DC is configured in a target band combination. In other words, the "featureSetCombinationDC" includes downlink and uplink configuration parameters defined for each of the band combinations. In a case where the "featureSetCombinationDC" is not included in the "DC-Support", the featureSet based on "BandCombination" is configured in the band combination when the NR-DC is configured in the target band combination.

According to the above embodiment, in a case where the NR-DC is configured in any given band combination, and the same UE capability as the CA in the band combination is supported by the NR-DC in the band combination, the user equipment 20 generates a report that does not include the UE capability for the NR-DC, so that the user equipment 20 can transmit, to the base station apparatus 10, the UE capability report of which the amount of data is smaller. Also, in a case where the NR-DC is configured in any given band combination, and a UE capability different from the CA in the band combination is supported by the NR-DC in the band combination, the user equipment 20 generates a report that includes the UE capability for the NR-DC, so that the user equipment 20 can transmit, to the base station apparatus 10, the UE capability report corresponding to the NR-DC supporting the UE capability different from the CA.

In other words, the efficiency for reporting of the capability of a user equipment for the dual connectivity in the wireless communication system can be improved.

### <Apparatus configuration>

Next, an example of functional configuration of the base station apparatus 10 and the user equipment 20 that execute the processing and operations described so far will be described. The base station apparatus 10 and the user equipment 20 include a function for implementing the above-described embodiment. However, each of the base station apparatus 10 and the user equipment 20 may have only some of the functions in the embodiment.

### <Base station apparatus 10>

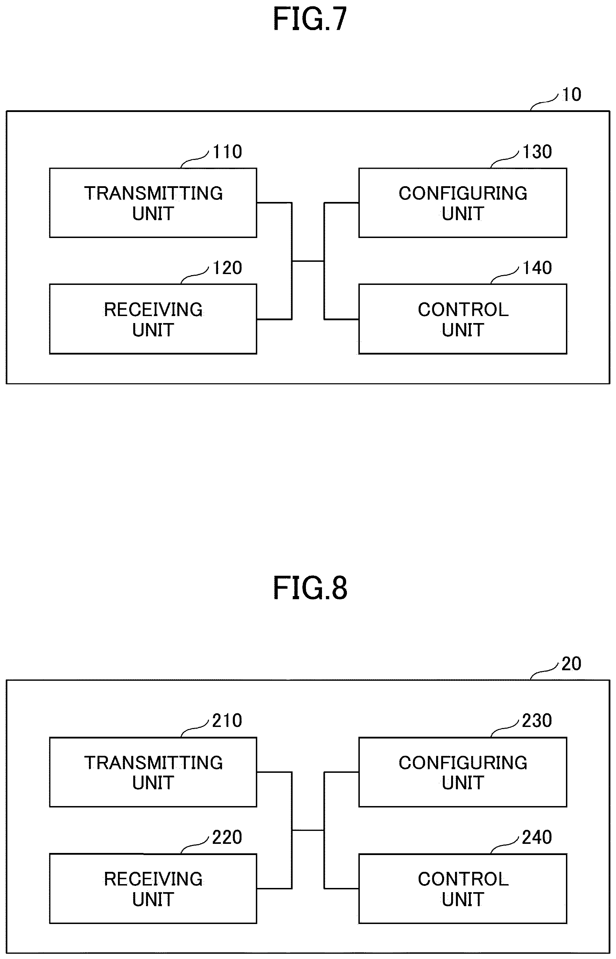

FIG. 7 is a drawing illustrating an example of a functional configuration of the base station apparatus 10 according to the embodiment of the present invention. As illustrated in FIG. 7, the base station apparatus 10 includes a transmitting unit 110, a receiving unit 120, a configuring unit 130, and a control unit 140. The functional configuration illustrated in FIG. 7 is only an example. As long as the operation according to the embodiment of the present invention can be executed, the functions may be divided in any way, and the functional units may be given any names.

The transmitting unit 110 includes a function of generating signals to be transmitted to the user equipment 20 and wirelessly transmitting the signals. Also, the transmitting unit 110 transmits messages, exchanged between network nodes, to another network node. The receiving unit 120 includes a function of receiving various types of signals transmitted from the user equipment 20 and acquiring, for example, information on a higher layer from the received signals. Further, the transmitting unit 110 has a function of transmitting NR-PSS, NR-SSS, NR-PBCH, a DL/UL control signal, or the like to the user equipment 20. Also, the receiving unit 120 receives messages, exchanged between network nodes, from another network node.

The configuring unit 130 stores configuration information configured in advance and various configuration information to be transmitted to the user equipment 20. The contents of the configuration information are, for example, configuration information about dual connectivity, information about transmission and reception configuration according to the UE capability of the user equipment 20.

As described in the embodiment, the control unit 140 performs control of transmission and reception including dual connectivity with the user equipment 20, control of process of UE capability reports received from the user equipment 20. A functional unit configured to transmit signals in the control unit 140 may be included in the transmitting unit 110, and a functional unit configured to receive signals in the control unit 140 may be included in the receiving unit 120.

### <User equipment 20>

FIG. 8 is a drawing illustrating an example of a functional configuration of the user equipment 20 according to the embodiment of the present invention. As illustrated in FIG. 8, the user equipment 20 includes a transmitting unit 210, a receiving unit 220, a configuring unit 230, and a control unit 240. The functional configuration illustrated in FIG. 8 is merely an example. As long as the operation according to the embodiment of the present invention can be executed, the functions may be divided in any way, and the functional units may be given any names.

The transmitting unit 210 generates a transmission signal from transmission data and wirelessly transmits the transmission signal. The receiving unit 220 wirelessly receives various types of signals, and acquires a signal in a higher-layer from the received signal in the physical layer. Also, the receiving unit 220 has a function of receiving NR-PSS, NR-SSS, NR-PBCH, DL/UL/SL control signals, reference signals, and the like that are transmitted from the base station apparatus 10. Also, for example, in D2D communication, the transmitting unit 210 transmits, to another user equipment 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 220 receives the PSCCH, the PSSCH, the PSDCH, the PSBCH, and the like, from the another user equipment 20.

The configuring unit 230 stores in a storage device various types of configuration information received from the base station apparatus 10 by the receiving unit 220. The configuring unit 230 also stores configuration information configured in advance. The contents of the configuration information are, for example, configuration information about the dual connectivity, information about transmission and reception configuration according to the UE capability.

As described in the embodiment, the control unit 240 performs control of process of UE capability reports of the user equipment 20 and transmission and reception control of the dual connectivity according to the UE capability. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 7 and 8) used for explaining the above embodiment illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

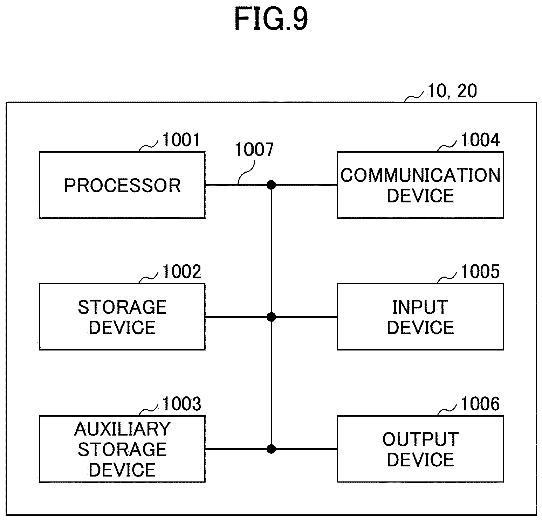

For example, the base station apparatus 10, the user equipment 20, and the like according to one embodiment of the present disclosure may function as a computer that performs processing of a wireless communication according to the present disclosure. FIG. 9 is a drawing illustrating an example of a hardware configuration of the base station apparatus 10 or the user equipment 20 according to an embodiment of the present disclosure. Each of the base station apparatus 10 and user equipment 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user equipment 20 may be configured to include one or more of the devices illustrated in drawings, or may be configured not to include some of the devices.

Each function of the base station apparatus 10 and the user equipment 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station apparatus 10, as illustrated in FIG. 7, may be implemented by a control program that is stored in the storage device 1002 and that is executed by the processor 1001. Also, for example, the control unit 240 of the user equipment 20, as illustrated in FIG. 8, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station apparatus 10 and the user equipment 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Conclusion of the Embodiments>

As hereinabove explained, according to the embodiments of the present invention, provided is a user equipment including a receiving unit configured to receive, from a base station apparatus, information for requesting a report of a UE (User Equipment) capability, a control unit configured to generate the report that includes a UE capability supported in a band combination, and a transmitting unit configured to transmit the report to the base station apparatus, wherein in a case where a first information element is configured in the report, the control unit generates the report in which a parameter applied to a communication performed with dual connectivity in the band combination is configured in the first information element, and in a case where the first information element is not configured in the report, the control unit generates the report that includes a second information element including a parameter for a carrier aggregation applied to the communication.

According to the above configuration, in a case where the NR-DC is configured in any given band combination, and the same UE capability as the CA in the band combination is supported by the NR-DC in the band combination, the user equipment 20 generates a report that does not include the UE capability for the NR-DC, so that the user equipment 20 can transmit, to the base station apparatus 10, the UE capability report of which the amount of data is smaller. In other words, the efficiency for reporting of the capability of the user equipment for the dual connectivity in the wireless communication system can be improved.

In a case where there is not any difference between a parameter supported by the carrier aggregation and a parameter supported by the dual connectivity in the band combination, the control unit may configure the first information element in the report and may not configure the second information element in the first information element. According to the above configuration, in a case where the NR-DC is configured in any given band combination, and the same UE capability as the CA in the band combination is supported by the NR-DC in the band combination, the user equipment 20 generates a report that does not include the UE capability for the NR-DC, so that the user equipment 20 can transmit, to the base station apparatus 10, the UE capability report of which the amount of data is smaller.

The first information element may be information indicating whether dual connectivity is supported in the band combination, and the second information element may be a configuration parameter for carrier aggregation defined for each of the band combinations or downlink and uplink configuration parameters defined for each of the band combinations. According to the above configuration, in a case where the NR-DC is configured in any given band combination, and a UE capability different from the CA in the band combination is supported by the NR-DC in the band combination, the user equipment 20 generates a report that includes the UE capability for the NR-DC, so that the user equipment 20 can transmit, to the base station apparatus 10, the UE capability report corresponding to the NR-DC supporting the UE capability different from the CA.

Also, according to the embodiment of the present invention, provided is a base station apparatus including a transmitting unit configured to transmit, to a user equipment, information for requesting a report of a UE (User Equipment) capability, a receiving unit configured to receive the report from the user equipment, and a control unit configured to configure a communication to which dual connectivity is applied, on the basis of the UE capability supported in a band combination included in the report, wherein in a case where a first information element is configured in the report, a parameter included in the first information element is applied to the communication performed with the dual connectivity in the band combination, and in a case where a first information element is not configured in the report, a second information element including a parameter for a carrier aggregation included in the report is applied to the communication.

According to the above configuration, in a case where the NR-DC is configured in any given band combination, and the same UE capability as the CA in the band combination is supported by the NR-DC in the band combination, the user equipment 20 generates a report that does not include the UE capability for the NR-DC, so that the user equipment 20 can transmit, to the base station apparatus 10, the UE capability report of which the amount of data is smaller. In other words, the efficiency for reporting of the capability of a user equipment for the dual connectivity in the wireless communication system can be improved.

### <Supplemental Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, and contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device **(e.g.,** a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Thing) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive- or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to assign, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, "UECapabilityEnquiry" is an example of information for requesting a report of UE capability. "UECapabilityInformation" is an example of a report of UE capability. The transmitting unit 210 and the receiving unit 220 are examples of a communication unit. The ca-ParametersNR or the featureSetCombination of the BandCombination is an example of a parameter supported by a band combination for carrier aggregation. The dc-Support is an example of a first information element. The ca-ParametersDC-Diff or the featureSetCombinationDC is an example of a second information element. The ca-ParametersDC-Diff is an example of configuration parameters of carrier aggregation defined for respective band combinations. The featureSetCombinationDC is an example of downlink and uplink configuration parameters defined for respective band combinations.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

This international patent application claims priority based on Japanese Patent Application No. 2019-093775 filed on May 17, 2019.

### LIST OF REFERENCE SYMBOLS

10 base station apparatus
110 transmitting unit
120 receiving unit
130 configuring unit
140 control unit
20 user equipment
210 transmitting unit
220 receiving unit
230 configuring unit
240 control unit
1001 processor
1002 storage device
1003 auxiliary storage device
1004 communication device
1005 input device
1006 output device

## Claims

1. A user equipment (20) comprising:
a receiving unit (220) configured to receive, from a base station apparatus (10), information for requesting a report of a User Equipment, UE, capability;
a control unit (240) configured to include, in the report, a UE capability supported in a band combination; and
a transmitting unit (210) configured to transmit the report to the base station apparatus (10),
wherein in a case where a first information element is configured in the report, the control unit (240) includes, in the report, a parameter applied to a communication performed with dual connectivity in the band combination, by setting the parameter in the first information element, and in a case where the first information element is not configured in the report, the control unit (240) includes, in the report, a second information element including a parameter for a carrier aggregation applied to the communication,
wherein the control unit (240) is configured to include, in the report, a feature set combination applied to the communication performed with the dual connectivity in the band combination by including, in the UE capability, a featureSetCombinationDC field for the band combination, and
wherein the control unit (240) is configured not to include, in the UE capability, the featureSetCombinationDC field for the band combination in a case where a feature set combination applied to the communication with the carrier aggregation is to be applied to the band combination.

2. A base station apparatus (10) comprising:
a transmitting unit (110) configured to transmit, to a user equipment (20), information for requesting a report of a User Equipment, UE, capability;
a receiving unit (120) configured to receive the report from the user equipment (20);
a control unit (130) configured to set, based on a UE capability supported in a band combination included in the report, a communication to which dual connectivity is applied,
wherein in a case where a first information element is configured in the report, the control unit (130) applies, to the communication with the band combination, a parameter included in the first information element, and in a case where the first information element is not configured in the report, the control unit (130) applies, to the communication, a second information element included in the report, the second information element including a parameter for a carrier aggregation applied to the communication,
wherein the control unit (130) is configured to apply a feature set combination indicated by a featureSetCombinationDC field to the communication with the dual connectivity in the band combination in a case where the UE capability includes the featureSetCombinationDC field for the band combination, and
wherein the control unit (130) is configured to apply a feature set combination applied to the communication with the carrier aggregation to the band combination in a case where the UE capability does not include the featureSetCombinationDC field for the band combination.

3. A communication method executed by a user equipment (20), the method comprising:
receiving, from a base station apparatus (10), information for requesting a report of a User Equipment, UE, capability;
including, in the report, a UE capability supported in a band combination; and
transmitting the report to the base station apparatus (10),
wherein in a case where a first information element is configured in the report, the including includes, in the report, a parameter applied to a communication performed with dual connectivity in the band combination, by setting the parameter in the first information element, and in a case where the first information element is not configured in the report, the including includes, in the report, a second information element including a parameter for a carrier aggregation applied to the communication,
wherein the including includes, in the report, a feature set combination applied to the communication performed with the dual connectivity in the band combination by including, in the UE capability, a featureSetCombinationDC field for the band combination, and
wherein the including does not include, in the UE capability, the featureSetCombinationDC field for the band combination in a case where a feature set combination applied to the communication with the carrier aggregation is to be applied to the band combination.

## Patentansprüche

1. Benutzergerät (20), umfassend:
eine Empfangseinheit (220), die ausgebildet ist, um von einer Basisstationseinrichtung (10) Informationen zum Anfordern eines Berichts über eine Benutzergerät-, UE-, Fähigkeit zu empfangen;
eine Steuereinheit (240), die ausgebildet ist, um in dem Bericht eine UE-Fähigkeit einzuschließen, die in einer Bandkombination unterstützt wird; und
eine Sendeeinheit (210), die ausgebildet ist, den Bericht an die Basisstationseinrichtung (10) zu übertragen,
wobei in einem Fall, in dem ein erstes Informationselement in dem Bericht ausgebildet ist, die Steuereinheit (240) in dem Bericht einen Parameter einschließt, der auf eine Kommunikation, die mit dualer Konnektivität in der Bandkombination durchgeführt wird, durch Einstellen des Parameters in dem ersten Informationselement angewendet wird, und in einem Fall, in dem das erste Informationselement nicht in dem Bericht ausgebildet ist, die Steuereinheit (240) in dem Bericht ein zweites Informationselement einschließt, das einen Parameter für eine Trägeraggregation beinhaltet, die auf die Kommunikation angewendet wird,
wobei die Steuereinheit (240) ausgebildet ist, um in den Bericht eine Merkmalssatzkombination einzuschließen, die auf die Kommunikation angewendet wird, die mit der dualen Konnektivität in der Bandkombination durchgeführt wird, indem in die UE-Fähigkeit ein Merkmalssatzkombinations-DC-Feld für die Bandkombination aufgenommen wird, und
wobei die Steuereinheit (240) ausgebildet ist, um in der UE-Fähigkeit das Merkmalssatzkombinations-DC-Feld für die Bandkombination in einem Fall nicht einzuschließen, in dem eine Merkmalssatzkombination, die auf die Kommunikation mit der Trägeraggregation angewendet wird, auf die Bandkombination angewendet werden soll.

2. Basisstationseinrichtung (10), umfassend:
eine Übertragungseinheit (110), die ausgebildet ist, um an ein Benutzergerät (20) Informationen zum Anfordern eines Berichts über eine Benutzergeräte-, UE-, Fähigkeit zu übertragen;
eine Empfangseinheit (120), die ausgebildet ist, um den Bericht von dem Benutzergerät (20) zu empfangen;
eine Steuereinheit (130), die ausgebildet ist, basierend auf einer UE-Fähigkeit, die in einer in dem Bericht enthaltenen Bandkombination unterstützt wird, eine Kommunikation einzustellen, auf die duale Konnektivität angewendet wird,
wobei in einem Fall, in dem ein erstes Informationselement in dem Bericht ausgebildet ist, die Steuereinheit (130) auf die Kommunikation mit der Bandkombination einen Parameter anwendet, der in dem ersten Informationselement eingeschlossen ist, und in einem Fall, in dem das erste Informationselement nicht in dem Bericht ausgebildet ist, die Steuereinheit (130) auf die Kommunikation ein zweites Informationselement anwendet, das in dem Bericht eingeschlossen ist, wobei das zweite Informationselement einen Parameter für eine Trägeraggregation einschließt, die auf die Kommunikation angewendet wird,
wobei die Steuereinheit (130) ausgebildet ist, um eine Merkmalssatzkombination, die durch ein Merkmalssatzkombinations-DC-Feld angezeigt wird, auf die Kommunikation mit der dualen Konnektivität in der Bandkombination anzuwenden, wenn die UE-Fähigkeit das Merkmalssatzkombinations-DC-Feld für die Bandkombination einschließt, und
wobei die Steuereinheit (130) ausgebildet ist, um eine Merkmalssatzkombination, die auf die Kommunikation mit der Trägeraggregation angewendet wird, auf die Bandkombination anzuwenden, in einem Fall, in dem die UE-Fähigkeit das Merkmalssatzkombinations-DC-Feld für die Bandkombination nicht einschließt.

3. Kommunikationsverfahren, das von einem Benutzergerät (20) ausgeführt wird, das Verfahren umfassend:
Empfangen von Informationen von einer Basisstationseinrichtung (10) zum Anfordern eines Berichts einer Benutzergerät-, UE-, Fähigkeit;
Einschließen in dem Bericht einer UE-Fähigkeit, die in einer Bandkombination unterstützt wird; und Übertragen des Berichts an die Basisstationseinrichtung (10), wobei in einem Fall, in dem ein erstes Informationselement in dem Bericht ausgebildet ist, das Einschließen in dem Bericht einen Parameter einschließt, der auf eine Kommunikation angewendet wird, die mit dualer Konnektivität in der Bandkombination durchgeführt wird, indem der Parameter in dem ersten Informationselement eingestellt wird, und in einem Fall, in dem das erste Informationselement nicht in dem Bericht ausgebildet ist, das Einschließen in dem Bericht ein zweites Informationselement einschließt, das einen Parameter für eine Trägeraggregation einschließt, die auf die Kommunikation angewendet wird,
wobei das Einschließen in den Bericht eine Merkmalssatzkombination einschließt, die auf die Kommunikation angewendet wird, die mit der dualen Konnektivität in der Bandkombination durchgeführt wird, indem in die UE-Fähigkeit ein Merkmalssatzkombinations-DC-Feld für die Bandkombination eingeschlossen wird, und
wobei das Einschließen in der UE-Fähigkeit das Merkmalssatzkombinations-DC-Feld für die Bandkombination in einem Fall nicht einschließt, in dem eine Merkmalssatzkombination, die auf die Kommunikation mit der Trägeraggregation angewendet wird, auf die Bandkombination angewendet werden soll.

## Revendications

1. Équipement utilisateur (20) comprenant :
une unité de réception (220) configurée pour recevoir, en provenance d'un appareil (10) formant station de base, des informations pour demander un rapport d'une capacité d'équipement utilisateur, UE ;
une unité de commande (240) configurée pour inclure, dans le rapport, une capacité d'UE prise en charge dans une combinaison de bandes ; et
une unité de transmission (210) configurée pour transmettre le rapport à l'appareil (10) formant station de base,
dans lequel dans un cas où un premier élément d'information est configuré dans le rapport, l'unité de commande (240) inclut, dans le rapport, un paramètre appliqué à une communication mise en œuvre avec une double connectivité dans la combinaison de bandes, en définissant le paramètre dans le premier élément d'information et dans un cas où le premier élément d'information n'est pas configuré dans le rapport, l'unité de commande (240) inclut, dans le rapport, un second élément d'information incluant un paramètre pour une agrégation de porteuses appliquée à la communication,
dans lequel l'unité de commande (240) est configurée pour inclure, dans le rapport, une combinaison d'ensembles de caractéristiques appliquée à la communication mise en œuvre avec la double connectivité dans la combinaison de bandes en incluant, dans la capacité d'UE, un champ featureSetCombinationDC (combinaison d'ensembles de caractéristiques DC) pour la combinaison de bandes, et
dans lequel l'unité de commande (240) est configurée pour ne pas inclure, dans la capacité d'UE, le champ featureSetCombinationDC pour la combinaison de bandes dans un cas où une combinaison d'ensembles de caractéristiques appliquée à la communication avec l'agrégation de porteuses doit être appliquée à la combinaison de bandes.

2. Appareil (10) formant station de base comprenant :
une unité de transmission (110) configurée pour transmettre, à un équipement utilisateur (20), des informations pour demander un rapport d'une capacité d'équipement utilisateur, UE ;
une unité de réception (120) configurée pour recevoir le rapport en provenance de l'équipement utilisateur (20) ;
une unité de commande (130) configurée pour définir, sur la base d'une capacité d'UE prise en charge dans une combinaison de bandes incluse dans le rapport, une communication à laquelle une double connectivité est appliquée,
dans lequel, dans un cas où un premier élément d'information est configuré dans le rapport, l'unité de commande (130) applique, à la communication avec la combinaison de bandes, un paramètre inclus dans le premier élément d'information et, dans un cas où le premier élément d'information n'est pas configuré dans le rapport, l'unité de commande (130) applique, à la communication, un second élément d'information inclus dans le rapport, le second élément d'information incluant un paramètre pour une agrégation de porteuses appliquée à la communication,
dans lequel l'unité de commande (130) est configurée pour appliquer une combinaison d'ensembles de caractéristiques indiquée par un champ featureSetCombinationDC avec la double connectivité dans la combinaison de bandes dans un cas où la capacité d'UE inclut le champ featureSetCombinationDC pour la combinaison de bandes, et
dans lequel l'unité de commande (130) est configurée pour appliquer une combinaison d'ensembles de caractéristiques appliquée à la communication avec l'agrégation de porteuses à la combinaison de bandes dans un cas où la capacité d'UE n'inclut pas le champ featureSetCombinationDC pour la combinaison de bandes.

3. Procédé de communication mis en œuvre par un équipement utilisateur (20), le procédé comprenant :
la réception, en provenance d'un appareil (10) formant station de base, d'informations pour demander un rapport d'une capacité d'équipement utilisateur, UE ;
l'inclusion, dans le rapport, d'une capacité d'UE prise en charge dans une combinaison de bandes ; et
la transmission du rapport à l'appareil (10) formant station de base,
dans lequel dans un cas où un premier élément d'information est configuré dans le rapport, l'inclusion inclut, dans le rapport, un paramètre appliqué à une communication mise en œuvre avec une double connectivité dans la combinaison de bandes, en définissant le paramètre dans le premier élément d'information, et, dans un cas où le premier élément d'information n'est pas configuré dans le rapport, l'inclusion inclut, dans le rapport, un second élément d'information incluant un paramètre pour une agrégation de porteuses appliquée à la communication,
dans lequel l'inclusion inclut, dans le rapport, une combinaison d'ensembles de caractéristiques appliquée à la communication mise en œuvre avec la double connectivité dans la combinaison de bandes en incluant, dans la capacité d'UE, un champ featureSetCombinationDC pour la combinaison de bandes, et
dans lequel l'inclusion n'inclut pas, dans la capacité d'UE, le champ featureSetCombinationDC pour la combinaison de bandes dans un cas où une combinaison d'ensembles de caractéristiques appliquée à la communication avec l'agrégation de porteuses doit être appliquée à la combinaison de bandes.
